(19) Europäisches Patentamt
European Patent Office
Office européen des brevets

(11) Veröffentlichungsnummer: **0 293 556 B1**

# (12) EUROPÄISCHE PATENTSCHRIFT

(45) Veröffentlichungstag der Patentschrift: **11.12.91**

(51) Int. Cl.$^5$: **B27K 3/50**

(21) Anmeldenummer: **88102871.6**

(22) Anmeldetag: **26.02.88**

## (54) Holzschutzmittel.

(30) Priorität: **27.05.87 DE 3718012**

(43) Veröffentlichungstag der Anmeldung:
**07.12.88 Patentblatt 88/49**

(45) Bekanntmachung des Hinweises auf die Patenterteilung:
**11.12.91 Patentblatt 91/50**

(84) Benannte Vertragsstaaten:
**AT BE CH DE ES FR GB GR IT LI LU NL SE**

(56) Entgegenhaltungen:
**EP-A- 0 189 844**
**EP-A- 0 198 132**

**CHEMICAL ABSTRACTS, Band 79, Nr. 23, 10. Dezember 1973, Seite 367, Zusammenfassung Nr. 136993q, Columbus, Ohio, US; & JP-A-72 50 366 (SANYO CHEMICAL INDUSTRIES, LTD) 18-12-1972**

**IDEM**

**CHEMICAL ABSTRACTS, Band 90, Nr. 4, 22. Januar 1979, Seite 95, Zusammenfassung Nr. 25076a, Columbus, Ohio, US; & JP-A-78 12 403 (HOKKO CHEMICAL INDUSTRY CO., LTD et al.) 03-02-1978**

**CHEMICAL ABSTRACTS; Band 90, Nr. 4, 22. Jan. 1979, Seite 95, Zusammenfassung Nr. 25076a, Columbus, Ohio, US;**

(73) Patentinhaber: **RÜTGERSWERKE AKTIENGESELLSCHAFT**
**Mainzer Landstrasse 217**
**W-6000 Frankfurt am Main 1(DE)**

(72) Erfinder: **Dietrich, Wolf, Dr.**
**Im Oberen Rech 7**
**W-6802 Ladenburg(DE)**
Erfinder: **Giebeler, Eberhard, Dr.**
**Obere Kippstrasse 21**
**W-6905 Schriesheim(DE)**
Erfinder: **Jeromin, Günter Erich, Dr.**
**Bergstrasse 14**
**W-6900 Heidelberg 1(DE)**
Erfinder: **Weiss, Wolfgang, Dr.**
**Kelterweg 3**
**W-6803 Edingen-Neckarhausen(DE)**

**EP 0 293 556 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wasserlösliche, fungizide Mittel zum Schutz von Holz, auf der Basis von quartären Ammoniumverbindungen. Es ist bekannt, daß quartäre Ammoniumverbindungen fungizid wirksam sind. Ihre alleinige Verwendung als Holzschutzmittel ist jedoch nicht ratsam, weil dabei eine hohe Konzentration der Wirkstoffe benötigt wird. Außerdem besteht die Gefahr des bakteriellen bzw. fungiziden Abbaus dieser Verbindungen. Aus DE-A-35 02 939 ist bekannt, als fungizide Mittel zum Schutz von Holz Mischungen von quartären Ammoniumverbindungen mit wasserlöslichen Salzen von 2-(Methoxy-carbonylamino)-benzimidazol einzusetzen, wobei ein synergistischer Effekt der beiden Wirkstoffe beschrieben wird. Diese Mittel sind insofern nicht optimal in ihrer Wirkungsweise, als einerseits die Salze des 2-(Methoxy-carbonylamino)-benzimidazols stark sauer sind und andererseits die quartären Ammoniumverbindungen ihre Wirksamkeit bevorzugt im schwach alkalischen Milien entfalten (Lit.: J. A. Drysdale, A. F. Preston; New Zealand J. of Forestry Sci. 12(3), 457-66 (1982))

Außerdem ist für eine gute Wirksamkeit eine relativ hohe Konzentration an quartären Ammoniumverbindungen und an Benzimidazol-Salz erforderlich.

Aus DE- 28 20 409 C3 ist bekannt, eine Mischung von quartären Ammoniumverbindungen und Guanidinsalz als fungizides Mittel zu verwenden. Auch hier gilt, daß das stark sauere Medium eine relativ hohe Konzentration der Wirkstoffe bedingt.

Aus JP 61 57 305 ist bekannt, eine Mischung aus 0,2% quartärer Ammoniumverbindungen und 0,3% $H_3BO_3$ gegen holzzerstörende Pilze einzusetzen. Nachteilig ist hier, daß beide Komponenten nacheinander appliziert werden müssen. Die Wirksamkeit gegen Bläue ist nicht beschrieben, ein Wirksamkeitsverlust durch fungiziden Abbau der quartären Ammoniumverbindung ist möglich.

Aus WO 86 00 560 ist eine Mischung aus 1% quartärer Ammoniumverbindung und 10% Harnstoff bekannt. Trotz hoher Konzentration ist diese Mischung jedoch nur gegen Bläue- und Schimmelpilze wirksam.

Es ist daher Aufgabe der Erfindung, wasserlösliche, fungizide Mittel zum Schutz von Holz bereitzustellen, die aber in niedriger Konzentration eingesetzt werden können und die eine lange Schutzdauer gewährleisten, wobei die quartären Ammoniumverbindungen in ihrem bevorzugten pH-Bereich wirksam werden können.

Überraschenderweise wurde gefunden, daß die fungizide Wirkung eines Mittels aus einem wasserlöslichen Salz des 2-Mercapto-pyridin- oder 2-Oxypyridin-N-oxids und einer quartären Ammoniumverbindung wesentlich besser ist als die Summe der Einzelwirkstoffe, daß sich die bekannten fungiziden Wirkungen der beiden Stoffgruppen in einem synergistischen Effekt erheblich steigern, wenn das richtige Mischungsverhältnis der beiden Wirkstoffe gewählt wird. Dieses Mischungsverhältnis von quartärer Ammoniumverbindung zum Salz des 2-Mercapto- oder 2-Oxypyridin-N-oxids liegt im Bereich von 3:1 bis 1:3. Darüberhinaus wird die biologische Abbaubarkeit der quartären Ammoniumverbindungen im Holz durch die Anwesenheit eines Salzes des 2-Mercapto-pyridin-N-oxids nahezu vollständig verhindert und die Wirksamkeit der quartären Ammoniumverbindungen wird dadurch optimiert, daß die wäßrige Lösung der Mischung schwach alkalisch ist.

Als wasserlösliche Salze des 2-Mercapto- oder 2-Oxypyridin-N-oxids dienen dessen Ammonium-, Alkali-oder Magnesiumsalze.

Quartäre Ammoniumverbindungen sind solche der allgemeinen Formel

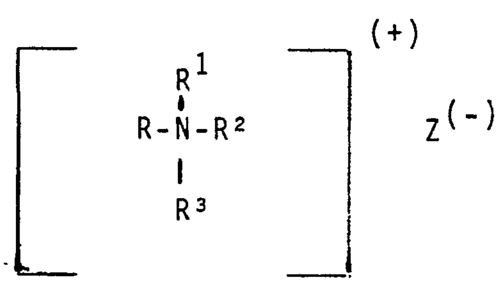

in der

R einen Alkylrest mit 8 bis 20 Kohlenstoffatomen, einen Alkenylrest mit 12 bis 20 Kohlenstoffatomen oder einen Benzylrest bedeutet, der gegebenenfalls durch $C_1$-$C_{20}$-Alkyl oder Halogen substituiert

ist,

$R^1$ $C_1$-$C_6$-Alkyl,

$R^2$ $C_1$-$C_6$-Alkyl,

$R^3$ Methyl oder $C_8$-$C_{16}$-Alkyl,

oder $R^1$, $R^2$ zusammen mit dem N einen heterocyclischen Rest bilden, der 4 bis 5 C-Atome, 1 bis 2 N-Atome und eine oder 2 Doppelbindungen enthält, wobei die Kohlenstoffatome gegebenenfalls durch $C_1$-$C_4$-Alkyl oder Halogen substituiert sind, und Z einen Säurerest bedeuten.

Beispiele für

einen Alkylrest mit 8 bis 20 Kohlenstoffatomen sind Octyl-, Nonyl-, Decyl-, Myristyl-($C_{14}$) oder Cetyl-($C_{16}$)-Reste. Ein Alkenylrest mit 12 bis 20 Kohlenstoffatomen ist beispielsweise der Oleylrest.

$C_1$-$C_{20}$-Alkyl ist beispielsweise $C_1$-$C_4$-Alkyl, z. B. Methyl-, Ethyl-, Propyl-. Halogen ist beispielsweise Chlor oder Brom.

$C_1$-$C_6$-Alkyl ist beispielsweise Methyl-, Ethyl-, Propyl-, Butyl-, i-Butyl, Pentyl- Hexyl-.

$C_8$-$C_{18}$-Alkyl ist beispielsweise Octyl-, Nonyl-, Decyl-, Myristyl-($C_{14}$) oder Cetyl-($C_{16}$).

Ein heterocyclischer Rest ist beispielsweise ein aromatischer, stickstoffhaltiger Rest mit 6 Ringgliedern, z. B. der Pyridinrest. Geeignete quartäre Ammoniumsalze sind z. B. Dimethyllaurylaminacetat, Dimethyllauryl-( 2 % $C_{10}$, 95 % $C_{12}$, 3 % $C_{14}$)-amin-Salz, Dimethyllauryl-(62 % $C_{12}$, 30 % $C_{14}$, 7 % $C_{16}$)-amin-Salz, Dimethylmyristyl-(3 % $C_{12}$, 95 % $C_{14}$, 2 % $C_{16}$)-amin-Salz, Trimethylcocoammoniumchlorid, Trimethylhexadecylammoniumchlorid, Trimethyloleylammoniumchlorid, Trimethyltalg- und Dimethyldicocoammoniumchlorid (1:1), Trimethyloleyl-und Dimethyldicocoammoniumchlorid (1:1), Dimethyldicocoammoniumchlorid, Dimethyltalgbenzylammoniumchlorid, Dimethylcocobenzylammoniumchlorid, Dimethyldialkyl-(25 % $C_8C_8$, 50 % $C_8C_{10}$, 25 % $C_{10}C_{10}$)-ammoniumchlorid, Dimethyldidecyl-($C_{10}C_{10}$)-ammoniumchlorid, Dimethylalkyl-(40 % $C_{12}$, 50 % $C_{14}$, 10 $C_{16}$)-ammoniumchlorid, Dimethylcoco-(69 % $C_{12}$, 50 % $C_{14}$, 6 % $C_{16}$)-aminacetat, Dimethyldialkyl-(25 % $C_{12}$, 60 % $C_{14}$, 15 % $C_{16}$)-ammoniumchlorid, Dimethyllauryl-(64 % $C_{12}$, 30 % $C_{14}$, 6 % $C_{16}$)-benzylammoniumchlorid, Dimethylcocoaminacetat, Dimenthylalkyl-($C_{12}C_{14}$)-$C_{14}$)-dichlorbenzylammoniumchlorid, 1,1- Dimethyl-4,4- bipyridiniumdichlorid, Myristyldimethylbenzylammoniumchlorid oder Cetylpyridiniumchlorid.

Da die fungizide Wirkung der quartären Ammoniumsalze durch das Kation bedingt wird, ist die Wahl des Anions im Prinzip beliebig.

Beispiele für derartige Anionen sind Sulfat, Nitrat, Chlorid, Acetat, Propionat oder fungizid wirkende Anionen wie z. B. Salicylat oder Borat. Die beiden Komponenten werden erfindungsgemäß im Gewichts-Verhältnis 1:3 bis 3:1, vorzugsweise 1:1 Gewichtsteile miteinander vermischt.

Wäßrige Lösungen enthalten z. B. zwischen 0,1 und 3 Gew.% Wirkstoffmischung, vorzugsweise 0,5 bis 1,5 % Wirkstoffmischung. Das erfindungsgemäße Holzschutzmittel kann darüber hinaus weitere biozide Wirkstoffe enthalten. Es kann zudem auch in organischen Lösungsmitteln gelöst sein, die mit Wasser mischbar sind, wie z. B. Methanol oder Ethanol.

Die Anwendung als Holzschutzmittel kann z. B. erfolgen:

durch Besprühen des Holzes mit der Lösung,

durch Tauchen des Holzes in die Lösung,

durch Streichen des Holzes, oder bevorzugt

durch Kesseldruckimprägnierung mit der Lösung.

Bei Holzfolgeprodukten, z. B. Holzschnitt, Zellstoff, sowie weiteren technischen Produkten, die einem Pilz-und/oder Bakterienbefall zugänglich sind, z. B. Zwischenprodukten bei der Papierherstellung, ist die Applikation den technischen Möglichkeiten anzupassen.

Die Wirksamkeit der Fungizide im Bereich des Holzschutzes erstreckt sich auf:

a) Schimmelpilze

b) Bläuepilze

c) holzzerstörende Pilze

Versuchsdurchführung

Die Versuche wurden in Petrischalen durchgeführt. Folgende Prüfpilze wurden verwendet:

a) Holzzerstörende Basidiomyceten:

Gloeophyllum trabeum

Poria monticola

Stereum spec.

Trametes versicolor

b) Bläuepilze:

Aureobasidium pullulans
Sclerophoma pithyophila
c) Schimmelpilze:
Aspergillus niger
Chaetomium globosum

Impfstücke der betreffenden Pilze wurden auf frischen Malzagar übertragen. Von den Basidiomyceten wurden jeweils 3, von den Bläuepilzen jeweils 4 Impfstücke - im gleichen Abstand voneinander - in Randnähe der Petrischalen auf den Nährboden gelegt. Die Schalen wurden anschließend eine Woche lang bei 22 bis 24 °C aufgestellt. Während dieser Zeit hatten sich aus den Impfstücken kleine Kolonien von etwa 15 mm Durchmesser entwickelt. Dann wurden in die Mitte der Nährbodenoberfläche kleine - zuvor sterilisierte - Kunststoff-Kreuze gelegt, auf welche die behandelten Holzproben bzw. die Kontrollproben aufgelegt wurden.

Vorbereitung der Holzproben: Von den Testsubstanzen wurden 1,25, 2,5 und 5,0 %ige Lösungen in Wasser hergestellt. Jeweils 0,2 g der fertigen Lösungen wurden mittels Pinsel auf Kiefernsplintholz-Furnierplättchen (Abmessungen: 30 mm x 30 mm x 1 mm) aufgetragen. Nach 24stündigem Trocknen an der Luft wurden sie auf die Kunststoff-Kreuze gelegt. Dann wurden die Schalen erneut bei 22 bis 24 °C untergebracht. Die unbehandelten Kontrollproben wurden vor dem Auflegen auf die Kreuze im Dampftopf sterilisiert. Alle Versuche wurden mit 4 Parallelen durchgeführt.

Nach 4-wöchiger Versuchsdauer wurden die Schalen beurteilt. Hierbei wurde folgendes Bewertungsschema verwendet:

| | |
|---|---|
| 0 | = kein Bewuchs der Probe |
| + | = Bewuchs nur am Probenrand oder an einer Stelle der Probe |
| + + | = Probe etwa zur Hälfte bewachsen |
| + + + | = Probe vollständig bewachsen |

Untersuchungsergebnisse finden sich in den nachfolgenden Tabellen 1 bis 3.

Dabei bedeuten

| | |
|---|---|
| Wirkstoff I: | Na-Salz von 2-Mercapto-pyridin-N-oxid |
| Wirkstoff II: | Na-Salz von 2-Oxy-pyridin-N-oxid |
| Wirkstoff III: | Didecyldimethylammoniumchlorid |
| Wirkstoff IV : | Alkylbenzyl-dimethylammoniumchlorid in dem die der Anzahl der Kohlenstoffatome in der Alkylgruppe im wesentlichen 12-18 beträgt. |

Tabelle 1

| | Konzentration | Poriamonticola | Stereum spec. | Asperg. niger | Bläuepilze |
|---|---|---|---|---|---|
| Wirkstoff I | 0,125% | + | + | +++ | + |
| | 0,25% | 0 | + | ++ | 0 |
| Wirkstoff III | 0,25% | ++ | ++ | ++ | ++ |
| | 0,50% | + | ++ | ++ | ++ |
| Wirkstoff I + III | 0,125% I + 0,25% III | 0 | 0...+ | ++ | +++ |
| | 0,25% I + 0.50% III | 0 | 0 | (+) | 0 |
| unbehandelt | - | +++ | +++ | +++ | +++ |

Tabelle 2

| | Konzentration | Chaetom. globosum | Bläuepilze | Gloeoph. trabeum |
|---|---|---|---|---|
| Wirkstoff I | 0,125% | +...++ | + | ++ |
| | 0,25% | +...++ | 0 | + |
| Wirkstoff IV | 0,25% | ++ | + | +++ |
| | 0,50% | +...++ | + | +++ |
| Wirkstoff I + IV | 0,125% I + 0,25% IV | (+) | 0 | ++ |
| | 0,25% I + 0.50% IV | 0 | 0 | 0 |
| unbehandelt | - | +++ | +++ | +++ |

Tabelle 3

| | Konzentration | Poriamonticola | Stereum spec. | Bläuepilze | Asperg. niger |
|---|---|---|---|---|---|
| Wirkstoff II | 0,125% | (+) | + | + | ++ |
| | 0,25% | 0 | + | (+) | + |
| Wirkstoff III | 0,20% | ++ | + | ++ | ++ |
| | 0,40% | + | + | ++ | + |
| Wirkstoff II + III | 0,125% II + 0,2% III | 0 | (+) | (+) | 0 |
| | 0,25% II + 0,4% III | 0 | 0 | 0 | 0 |
| unbehandelt | - | +++ | +++ | +++ | +++ |

## Patentansprüche

1. Holzschutzmittel **dadurch gekennzeichnet,** daß es eine Mischung aus einem wasserlöslichen Salz des 2-Mercapto- oder des 2-Oxypyridin-N-oxids und einem wasserlöslichen Salz einer quartären

Ammoniumverbindung im Gewichtsverhältnis 1:3 bis 3:1 enthält.

2. Holzschutzmittel nach Anspruch 1, **dadurch gekennzeichnet,** daß als Salz der quartären Ammoniumverbindung eine Verbindung der allgemeinen Formel

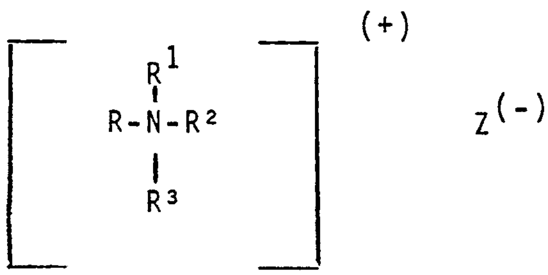

verwendet wird,
in der

- R einen Alkylrest mit 8 bis 20 Kohlenstoffatomen, einen Alkenylrest mit 12 bis 20 Kohlenstoffatomen oder einen Benzylrest bedeutet, der gegebenenfalls durch $C_1$-$C_{20}$-Alkyl oder Halogen substituiert ist,
- $R^1$ $C_1$-$C_6$-Alkyl, $R^2$ $C_1$-$C_6$-Alkyl,
- $R^3$ Methyl oder $C_8$-$C_{18}$-Alkyl

oder $R^2$ und $R^3$ zusammen mit dem Stickstoffatom einen heterocyclischen Rest bilden, der 4 bis 5 C-Atome, 1 bis 2 N-Atome und eine oder 2 Doppelbindungen enthält, wobei die Kohlenstoffatome gegebenenfalls durch $C_1$-$C_4$-Alkyl oder Halogen substituiert sind, und Z einen Säurerest bedeutet.

3. Holzschutzmittel nach den Ansprüchen 1 und 2, **dadurch gekennzeichnet,** daß es in Form einer wäßrigen Lösung vorliegt.

4. Holzschutzmittel nach den Ansprüchen 1 bis 3, **dadurch gekennzeichnet,** daß es als Z ein fungizides Anion enthält.

5. Holzschutzmittel nach den Ansprüchen 1 bis 4, **dadurch gekennzeichnet,** daß es in Form einer Lösung in einem mit Wasser mischbaren Lösungsmittel vorliegt.

6. Verfahren zum Schutz von Holz, **dadurch gekennzeichnet,** daß man das Holz mit einer wäßrigen Lösung des Mittels gemäß der Ansprüche 1 bis 5 behandelt.

## Claims

1. A wood-protection agent, characterized in that it contains a mixture of a water-soluble salt of 2-mercapto- or 2-oxypyridine-N-oxide and a water-soluble salt of a quaternary ammonium compound in a ratio by weight of from 1 : 3 to 3 : 1.

2. A wood-protection agent according to Claim 1, characterized in that the salt of the quaternary ammonium compound used is in the form of a compound of the general formula

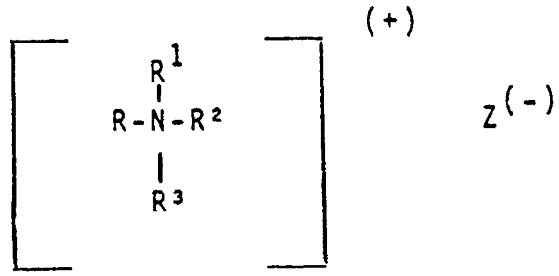

in which

- R is an alkyl radical with from 8 to 20 carbon atoms
  an alkenyl radical with from 12 to 20 carbon atoms,
  or a benzyl radical which where appropriate is substituted by $C_1$ to $C_{20}$ alkyl or halogen,
- $R^1$ is $C_1$ to $C_6$ alkyl,
- $R^2$ is $C_1$ to $C_6$ alkyl,
- $R^3$ is methyl or $C_8$ to $C_{18}$ alkyl,

or $R^2$ and $R^3$ together with the nitrogen atom form a heterocyclic radical which contains 4 to 5 C atoms, 1 to 2 N atoms and one or 2 double bonds, the carbon atoms where appropriate being substituted by $C_1$ to $C_4$ alkyl or halogen, and
Z is an acid residue.

3. A wood-protection agent according to Claims 1 and 2, characterized in that it exists in the form of an aqueous solution.

4. A wood-protection agent according to Claims 1 to 3, characterized in that it contains a fungicidal anion as Z.

5. A wood-protection agent according to Claims 1 to 4, characterized in that it exists in the form of a solution in a solvent miscible with water.

6. A process for the protection of wood, characterized in that the wood is treated with an aqueous solution of the agent according to Claims 1 to 5.

**Revendications**

1. Agent protecteur du bois, caractérisé en ce qu'il contient un mélange composé d'un sel hydrosoluble du N-oxyde de 2-mercapto- ou de 2-oxypyridine et d'un sel hydrosoluble d'un composé d'ammonium quaternaire dans le rapport pondéral de 1:3 à 3:1.

2. Agent protecteur du bois selon la revendication 1, caractérisé en ce qu'on utilise en tant que sel du composé d'ammonium quaternaire un composé de formule générale

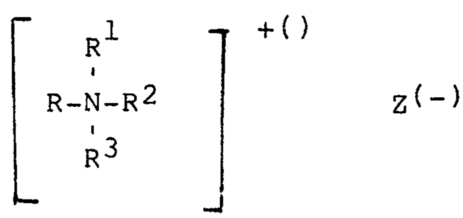

dans laquelle

- R signifie un reste alkyle avec 8 à 20 atomes de carbone, un reste alkylène avec 12 à 20 atomes de carbone ou un reste benzyle qui est éventuellement substitué par un alkyle en $C_1$ à $c_{20}$ ou un halogène,

$R^1$ représente un alkyle en $C_1$ à $C_6$,
$R^2$ un alkyle en $C_1$ à $C_6$,
$R^3$ un méthyle ou un alkyle en $C_8$ à $C_{16}$, ou $R^1$, $R^2$ forment ensemble avec l'atome d'azote un reste hétérocyclique contenant 4 à 5 atomes de C, 1 à 2 atomes de N et une ou 2 doubles liaisons, les atomes de carbone étant éventuellement substitués par un alkyle en $C_1$ à $C_4$ ou un halogène, et Z signifie un reste acide.

**3.** Agent protecteur du bois selon les revendications 1 et 2, caractérisé en ce qu'il se présente sous forme d'une solution aqueuse.

**4.** Agent protecteur du bois selon les revendications 1 à 3, caractérisé en ce qu'il contient, en tant que Z, un anion fongicide.

**5.** Agent protecteur du bois selon les revendications 1 à 4, caractérisé en ce qu'il se présente sous forme d'une solution dans un solvant miscible à l'eau.

**6.** Procédé pour la protection du bois, caractérisé en ce que l'on traite le bois à l'aide d'une solution aqueuse de l'agent selon les revendications 1 à 5.